# EUROPEAN PATENT SPECIFICATION

(11) **EP 0 306 116 B1**
(45) Date of publication and mention of the grant of the patent: **30.11.1994**
(21) Application number: 88201905.2
(22) Date of filing: 02.09.1988
(51) Int. Cl.: C08L 73/00, C08K 3/34

(54) **Polymer compositions**
Harzzusammensetzungen
Compositions de polymère

(30) Priority: 04.09.1987 US 94977
(43) Date of publication of application: 08.03.1989
(73) Proprietor: SHELL INTERNATIONALE RESEARCH MAATSCHAPPIJ B.V., 2596 HR Den Haag (NL)
(72) Inventor: Kastelic, John Richard, Katy Texas 77450 (US)

(56) References cited:
- US-A- 3 929 727
- US-A- 4 742 107
- PATENT ABSTRACTS OF JAPAN, vol. 11, no. 214 (C-434)[2661], 10th July 1987;& JP-A-62 32 144
- "Taschenbuch d. Kunststoffadditive", R. Gächter, (1983) p. 447, 451, 454
- "Polymer Composites", B. Sedlack, (1985), p. 191-194
- "Handbook of Fillers for Plastics", H. Katz (1978), p. 347, 348, 355

## Description

This invention relates to certain polymer compositions of improved mechanical properties. More particularly, the invention relates to compositions comprising a major proportion of a polyketone polymer and blended therewith a lesser proportion of mica.

Blending of organic polymers with inorganic fillers is well known. Blending typically serves to improve the mechanical properties of the polymer as well as to extend the polymer through use of generally less expensive fillers. Typical fillers include talc, mica, certain calcium carbonates, glass fibers and gypsum.

The ease with which blends of an organic polymer and an inorganic filler are produced and processed is greatly dependent upon the physical properties of the polymer and the filler as well as the extent of interaction between the components of the blend. Particularly important is the degree of adhesion between the polymer and the filler, especially when the polymer blend is to be employed in the production of shaped articles or articles which are to be subjected to mechanical or thermal stress. Improvement in important mechanical properties such as tensile strength, stiffness, ductility, and high heat distortion temperature results when a relatively high degree of adhesion occurs between the polymer and the filler. Lack of adhesion can be sufficiently troublesome so as to require the addition of cross-linking agents to overcome the problem and result in satisfactory mechanical properties. An easily observed measure of the degree of adhesion, or lack of adhesion, is the phenomenon of whitening of a polymer composition under stress or distortion. Japanese Patent Applications Nos. 59.064647 and 59.147035 propose the use of a silane cross-linking agent in order to obtain good mechanical properties when a number of inorganic fillers including mica are blended with polyolefins, and teach that resistance to whitening is a desired property of the disclosed compositions which employ cross-linking agents.

A class of polymers also known as polyketones has recently become of increased importance with improved methods for the production of linear alternating copolymers and terpolymers produced from carbon monoxide and at least one ethylenically unsaturated hydrocarbon, for example, ethylene or mixtures of ethylene and propylene. These polymers are relatively high molecular weight thermoplastic polymers having utility in the production of structural articles such as containers for food and drink and parts for the automotive industry. Although the properties of these polymers per se are entirely satisfactory for many significant applications, it would be of advantage to provide compositions thereof which exhibit improved mechanical properties, particularly with respect to resistance to stress whitening and tensile strength. It has now been found, that this can be achieved by incorporating mica in the polymers.

Accordingly, this invention relates to polymer compositions comprising a polymer and a filler characterized in containing a linear alternating polymer of carbon monoxide and at least one ethylenically unsaturated compound, and mica, preferably in a minor amount, relative to the polymer, thereof. The polymer compositions exhibit improved mechanical properties and adhesion between the polymer and the filler.

The polymers which are incorporated in the compositions of the invention are those linear alternating polyketones produced from carbon monoxide and at least one ethylenically unsaturated compound. Suitable ethylenically unsaturated compounds for the production of polyketones through polymerization with carbon monoxide are hydrocarbons of from 2 to 20 carbon atoms inclusive, preferably from 2 to 10 carbon atoms inclusive and are aliphatic including ethylene and other alpha-olefins such as propylene, butene-1, isobutylene, octene-1 and dodecene-1, or are arylaliphatic hydrocarbons containing an aryl substituent on an otherwise aliphatic molecule, particularly an alpha-olefin containing an aryl substituent on a carbon atom of the ethylenic unsaturation, e.g., styrene, p-methylstyrene, m-ethylstyrene and p-propylstyrene. Other ethylenically unsaturated compounds are e.g. acrylate esters. Preferred polyketone polymers for use in the compositions of the invention are copolymers of carbon monoxide and ethylene or terpolymers of carbon monoxide, ethylene and propylene.

Of particular interest are those polyketones of molecular weight from about 1000 to about 200,000, especially those polymers of molecular weight from 10,000 to 50,000 and containing substantially equimolar quantities of carbon monoxide and ethylenically unsaturated hydrocarbon.

Such polymers are produced by contacting the carbon monoxide and the ethylenically unsaturated hydrocarbon(s) under polymerization conditions in the presence of a catalytic quantity of a catalyst formed from a metal compound of palladium, cobalt or nickel, an anion of a non-hydrohalogenic acid having a pK_{A} less than 6, preferably less than 2, and certain bidentate ligands of nitrogen or of phosphorus, arsenic or antimony. Although the scope of the polymerization process is extensive, for purposes of illustration of a preferred method of producing the polyketone polymer, the metal compound is palladium acetate, the anion is the anion of trifluoroacetic acid or para-toluene-sulphonic acid and the bidentate ligand is 1,3-bis(diphenylphosphino)propane.

Polymerization is typically carried out at elevated temperature and pressure in the gaseous phase in the substantial absence of reaction diluent or in the liquid or slurry phase in the presence of a reaction diluent such as a lower alkanol, e.g., methanol or ethanol. The reactants and catalyst are contacted by conventional methods such as shaking or stirring and subsequent to reaction the polymer product is recovered as solid by filtration or decantation. The polymer product will, on occasion, contain metal or other residues of the catalyst which are removed, if desired, by treatment of the polymer product with a solvent which is selective for the residues. Production of this class of polymers is illustrated, for example, by European patent Applications Nos. 181,014 and 121,965.

The physical properties of the polymer will be in part determined by the molecular weight and whether the polymer is a copolymer or terpolymer and what unsaturated hydrocarbons have been employed in its production. Typical melting points of the polyketone polymers are from 175 °C to 300 °C, more frequently from 210 °C to 260 °C. The structure of the polymer in the preferred modifications is that of a linear alternating polymer of units of carbon monoxide and ethylene and carbon monoxide and any second ethylenically unsaturated hydrocarbon if present. The preferred polyketone polymers contain substantially one carbon monoxide moiety for each moiety of unsaturated hydrocarbon. When terpolymers are produced from carbon monoxide, ethylene and a second ethylenically unsaturated hydrocarbon, i.e., an ethylenically unsaturated hydrocarbon of at least 3 carbon atoms such as propylene, there will be at least about 2 units incorporating moieties of ethylene per unit incorporating a moiety of the second ethylenically unsaturated hydrocarbon, preferably from 10 to 100 units incorporating moieties of ethylene per unit incorporating a moiety of the second ethylenically unsaturated hydrocarbon. The preferred class of polyketone polymers is therefore characterized by a polymer chain of the formula 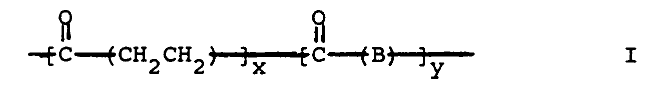
wherein B is the moiety obtained by the polymerization of the second ethylenically unsaturated hydrocarbon through the ethylenic unsaturation, and x and y are integers (1, 2, 3, ........). The 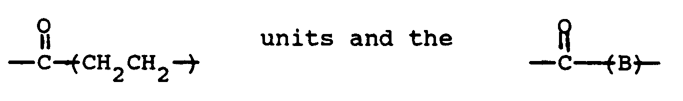
units will also occur randomly throughout the polymer chain although the ratio of y:x in the above formula will be up to 0.5. In the modification of the invention which employs copolymers of carbon monoxide and ethylene without the presence of a second ethylenically unsaturated hydrocarbon, the ratio of y:x is 0. When y is other than 0, ratios of y:x from 0.01 to 0.1 are preferred.

The above formula I depicts the polymer chain which will have end groups which depend upon the particular components present during the polymerization and how the polymer is processed during any subsequent purification. The precise nature of such end groups or "caps" is not critical, however, and the polymeric polyketones are fairly depicted through use of the polymer chain.

The polymer compositions of the invention comprise the above polyketone polymers incorporating uniformly therein a minor proportion, relative to the polymer, of mica. The micas which are suitably used in the compositions of the invention are those silicate materials characterized physically as flat, six-sided monoclinic crystals which undergo a nearly perfect basal cleavage to yield thin, tough, flexible flakes. Such micas are characterized as high aspect micas, having an aspect of up to 20:1, preferably up to 100:1. By the aspect of a mica particle is meant the ratio of the length of a particle to the thickness of the particle. The actual chemical composition will vary over a range of micas. Phlogopite is a preferred mica but other natural or synthetic micas such as muscovite, biolite, fluorophlogopite and barium fluorophlogopite and barium disilicate can be used. Micas are further described in Kirk-Othmer, Encyclopedia of Chemical Technology, Second Edition, Vol. 13, pp. 398-424.

The size of the particles of mica which are useful in the compositions can vary but particles from 0.289 mm (50 mesh) to 0.025 mm (600 mesh) are suitable with particles from 0.149 mm (100 mesh) to 0.037 mm (400 mesh) being preferred.

The amount of mica to be incorporated into the compositions of the invention is a minor amount relative to the polymer which is present as the major component in the total blend. Amounts of mica from 10% by weight to 45% by weight, based on the total composition, are satisfactory with amounts from 10% by weight to 35% by weight, based on the total composition, being preferred.

The method of forming the polymer compositions is not critical so long as the method results in a substantially uniform blend of the composition components. The components are dry blended and converted to a substantially uniform composition by application of elevated temperature and pressure. Alternatively, the polymer is heated until molten and the mica mixed therewith through the use of a high-shear mixer, extruder or kinetic compounder.

The polymer composition, in addition to polymer and mica, may incorporate conventional additives which are inert to the polymer and mica such as plasticizers, mold release agents, antioxidants, pigments, other fillers and reinforcements such as talc and glass fibers, and glass modifiers which are added by blending or other conventional methods together with or separately from the mica. The resulting compositions are processed by conventional methods such as injection molding, pressure forming, thermoforming, sheet extrusion and sheet casting which do not serve to degrade the polymer or the composition.

The compositions are characterized by improved mechanical properties of flexibility, low heat distortion and strength and by enhanced resistance to whitening in molded articles, even those articles which incorporate rather sharp angles in their physical shape. The compositions have particular utility in the production of containers and mechanical parts, particularly those having a large and continuous surface where strength, uniformity and appearance are important. Moreover, the compositions of the invention exhibit improved paint adhesion which, together with low heat distortion, offer significant advantages when paints requiring baking are employed, e.g., in exterior automobile parts. Other applications in which the compositions of the invention offer significant advantages are hot water plumbing and those having high temperature requirements.

The compositions of the invention are further illustrated by the following Examples which should not be construed as limiting.

### Example 1

A terpolymer of carbon monoxide, ethylene and propylene was prepared in the presence of a catalyst formed from palladium acetate, the anion of trifluoroacetic acid, and 1,3-bis(diphenylphosphino)propane. The polymer had a melting point range of 215-220 °C. The polymer was blended with 15% by weight of mica by use of a twin-screw extruder to produce nibs. The nibs were injection molded into plaques of approximately 10 cm by 10 cm by 1.25 mm dimensions. These plaques were deformed by Solid Phase Pressure Forming into shallow 60 ml cups. There was no visual evidence of stress whitening.

### Example 2

Blends of 20% by weight of mica in a polymer prepared as in Example 1 (Sample A) and 30% by weight of mica in a polymer prepared as in Example 1 (Sample B) were prepared by use of a twin-screw extruder to produce nibs. The nibs were molded into plaques of approximately 10 cm x 10 cm x 1.25 mm dimensions by injection molding. These plaques were formed into shallow trays and 60 ml cups which exhibited high stiffness and good appearance without visual evidence of whitening under stress.

### Example 3

Samples A and B prepared according to Example 2 were molded into test bars having dimensions approximately 10 cm x 12.5 mm x 3 mm. These bars were evaluated for tensile strength according to the method ASTM-D-638. Four specimens of Sample A were tested and five specimens of Sample B were tested. The results are shown below.

| Sample A | | | |
|---|---|---|---|
| Specimen No. | 1% Secant Modulus (MPa) | Stress at Yield (MPa) | Elongation at Failure (%) |
| 1 | 2908.924 | 62.71023 | 11.689 |
| 2 | 2888.855 | 62.51229 | 9.870 |
| 3 | 2850.243 | 62.26746 | 11.306 |
| 4 | 2878.189 | 62.51651 | 10.973 |
| Average | 2881.570 | 62.51714 | 10.959 |
| Typical Polymer without mica | 1380-1725 | 48-55 | 60-120 |

| Sample B | | | |
|---|---|---|---|
| Specimen No. | 1% Secant Modulus (MPa) | Stress at Yield (MPa) | Elongation at Failure (%) |
| 1 | 3798.141 | 66.11983 | 7.376 |
| 2 | 3749.892 | 66.47071 | 7.186 |
| 3 | 3817.593 | 66.25604 | 6.289 |
| 4 | 3763.140 | 66.21455 | 7.417 |
| 5 | 3777.234 | 66.27048 | 6.370 |
| Average | 3781.199 | 66.26632 | 6.928 |

It follows from these results that the incorporation of 20 to 30% of mica improves the tensile strength considerably.

## Claims

1. Polymer compositions comprising a linear alternating polymer of carbon monoxide and at least one ethylenically unsaturated compound and a filler characterized in that the filler is mica in an amount of from 10 to 45% by weight based on the weight of the composition

2. A composition as claimed in claim 1, characterized in that the polymer is a linear alternating polymer of carbon monoxide, ethylene and propylene uniformly incorporating from 10% by weight to 45% by weight, based on total composition, of mica.

3. A composition as claimed in claim 1, characterized in comprising a linear alternating polymer of the formula 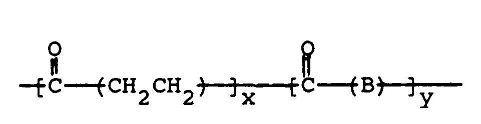 wherein B is the moiety of an ethylenically unsaturated alpha-olefin of at least 3 carbon atoms polymerized through the ethylenic unsaturation, x and y are integers, the ratio of y:x is no more than 0.5, and a quantity from 10% by weight to 45% by weight, based on total composition, of mica incorporated uniformly therein.

4. A composition as claimed in claim 3, characterized in that the alpha-olefin is propylene and the ratio of y:x is from 0,01 to 0,1.

5. A composition as claimed in any of claims 1-4, characterized in that the mica used has an average particle size of from 0.025 to 0.289 mm.

6. Shaped articles, characterized in that they consist at least partly of a polymer composition as claimed in one or more of claims 1-5.

## Patentansprüche

1. Polymerzusammensetzungen, umfassend lineare Polymere mit alternierender Struktur aus Kohlenmonoxid und mindestens einer ethylenisch ungesättigten Verbindung und einem Füllstoff, dadurch gekennzeichnet, daß der Füllstoff Glimmer in einer Menge von 10 bis 45 Gew.%, bezogen auf das Gewicht der Zusammensetzung, ist.

2. Eine Polymerzusammensetzung nach Anspruch 1, dadurch gekennzeichnet, daß das Polymer ein lineares Polymer mit alternierender Struktur aus Kohlenmonoxid, Ethylen und Propylen ist, in welchem 10 bis 45 Gew.% Glimmer, bezogen auf die Gesamtzusammensetzung, gleichförmig eingearbeitet vorliegen.

3. Eine Polymerzusammensetzung nach Anspruch 1, dadurch gekennzeichnet, daß sie ein lineares Polymer mit alternierender Struktur der nachstehenden Formel enthält 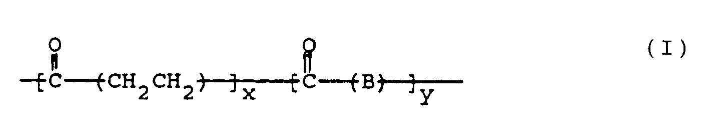 in welcher B der Molekülteil eines ethylenisch ungesättigten alpha-Olefins mit mindestens drei Kohlenstoffatomen ist, welches über die olefinische Ungesättigtheit einpolymerisiert ist, während x und y ganze Zahlen bedeuten und das Verhältnis y:x einen Wert von nicht mehr als 0,5 hat, und in welcher der Glimmer gleichförmig eingearbeitet vorliegt.

4. Eine Zusammensetzung nach Anspruch 3, dadurch gekennzeichnet, daß das alpha-Olefin Propylen ist und daß der Wert für das Verhältnis y:x im Bereich von 0,01 bis 0,1 liegt.

5. Eine Zusammensetzung, wie in einem der Ansprüche 1 bis 4 beansprucht, dadurch gekennzeichnet, daß der verwendete Glimmer eine mittlere Teilchengröße im Bereich von 0,025 bis 0,289 mm aufweist.

6. Geformte Gegenstände, dadurch gekennzeichnet, daß sie zumindestens teilweise aus einer Polymerzusammensetzung bestehen, wie sie in einem oder mehreren der Ansprüche 1 bis 5 beansprucht wird.

## Revendications

1. Compositions de polymère comprenant un polymère alterné linéaire de monoxyde de carbone et au moins un composé à insaturations éthyléniques et une charge, caractérisées en ce que la charge est du mica en une quantité de 10 à 45% en poids par rapport au poids de la composition.

2. Composition selon la revendication 1, caractérisée en ce que le polymère est un polymère alterné linéaire de monoxyde de carbone, d'éthylène et de propylène incorporant uniformément de 10% en poids à 45% en poids, par rapport à la composition totale, de mica.

3. Composition selon la revendication 1, caractérisée en ce ou'elle comprend un polymère alterné linéaire de formule 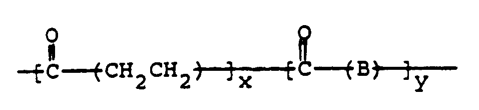 où B est le fragment d'une alpha-oléfine à insaturations éthyléniques ayant au moins 3 atomes de carbone polymérisée par l'intermédiaire de l'insaturation éthylénique, x et y sont des entiers, le rapport de y:x n'est pas supérieur à 0,5, et du mica oui s'y trouve uniformément incorporé.

4. Composition selon la revendication 3, caractérisée en ce que l'alpha-oléfine est du propylène et le rapport de y:x est de 0,01 à 0,1.

5. Composition selon l'une quelconque des revendications 1-4, caractérisée en ce que le mica utilisé a une taille moyenne des particules de 0,025 à 0,289 mm.

6. Articles conformés, caractérisés en ce qu'ils consistent au moins pour partie en une composition de polymère selon l'une ou plusieurs des revendications 1-5.
